# NEW EUROPEAN PATENT SPECIFICATION

(11) **EP 0 045 117 B2**
(45) Date of publication and mention of the opposition decision: **12.01.1994**
(45) Mention of the grant of the patent: 14.08.1985
(21) Application number: 81201022.1
(22) Date of filing: 27.03.1979
(51) Int. Cl.: G11B 7/00

(54) **Apparatus and method for writing a signal information track on a disc**
Gerät und Verfahren zum Schreiben einer Informationsspur auf eine Scheibe
Appareil et méthode pour écrire une piste d'information sur un disque

(30) Priority: 27.03.1978 US 890407; 27.03.1978 US 890771
(43) Date of publication of application: 03.02.1982
(62) Divisional of application: 79300490.4
(73) Proprietor: DISCOVISION ASSOCIATES, Costa Mesa California 92626 (US)
(72) Inventor: Wilkinson, Richard L., E. Toro California 92630 (US); Winslow, John S., Altadena California 91001 (US)
(74) Representative: Raynor, John

(56) References cited:
- EP-A- 0 005 316
- EP-A- 0 028 111
- DE-A- 2 462 834
- DE-A- 2 521 695
- GB-A- 1 257 990
- NL-A- 7 709 928
- US-A- 3 579 145
- INFORMATION DISPLAY, vol. 12, no. 2, April 1976, pages 12-19, Los Angeles, CA, (USA) K.D. BROADBENT: "A review of the MCA disco-vision system"
- PATENTS ABSTRACTS OF JAPAN, vol. 2, no. 45, 27th March 1978, page 525 E78;
- Optics and Laser technology, Vol. 9, No. 4, August 1977, pages 169-173
- J. SMPTE, vol. 83, July 1974, pp. 554-559

## Description

The present application is one of a series of related applications consisting of EP-A-5 316 (the parent case) and divisional applications EP-A-44 121, EP-A-44 122, EP-A-44 603, EP-A-45 117 and EP-A-48 041. These cases are all concerned with recording information on a surface with a modulated radiation beam, the surface changing its characteristics when the radiation exceeds a threshold level. EP-A-5 316, EP-A-44 122 and EP-A-4 448 041 are concerned especially with feedback to keep the average intensity of the radiation reaching the surface equal to the threshold level; EP-A-44 603 also uses such feedback, in addition to a control for the intensity of the unmodulated radiation, so that when the average intensity of the radiation reaching the surface equals the threshold level the modulator is at the centre of its range of modulation. EP-A-44 121 is concerned especially with driving the beam modulator with a triangular wave, the modulator having a sinusoidal relationship between its drive voltage and its radiation transfer function. EP-A-45 117 is concerned especially with a feedback system which monitors the second harmonic distortion in the recording beam and controls the modulator to reduce that distortion.

The above-mentioned EP-A-5 316 discloses apparatus for writing a frequency modulated signal upon a disc member mounted on a turntable. The turntable is driven by a motion control assembly which rotates the disc precisely in a circle at a constant rate of rotation and a translational drive assembly for translating the writing beam at a very constant, and very low velocity along a radius of the rotating disc. The rotational drive of the disc is synchronised with the translational drive of the writing beam to create a spiral track of predetermined pitch. In a preferred embodiment, the spacing between adjacent tracks of the spiral is two microns, centre to centre. The indicia is formed having a width of one micron. This leaves an intertrack or guard area of one micron between indicia in adjacent tracks. If desired, the indicia can be formed as concentric circles by translating in incremental steps rather than by translating at a constant velocity as just described.

A linearly polarised ion laser is used as the source of the writing beam. A Pockels cell is used to rotate the plane of polarisation of the writing beam with respect to its fixed plane of linear polarisation. A linear polariser attenuates the rotated writing beam in an amount proportional to the difference in polarisation between the light in the writing beam and the axis of the linear polariser. The combination of a Pockels cell and linear polariser modulates the writing beam with the video information to be stored. This modulation follows the pattern provided by control signals furnished by a Pockels cell driver.

The video signal to be recorded is applied to a frequency modulator circuit. The output from the modulator circuit is a rectangular wave whose frequency is proportional to the video signal. The duration of each cycle of the rectangular waveform is variable as is characteristic of a frequency modulated signal. As is characteristic of a rectangular wave, it has an upper voltage level and a lower voltage level. The upper and lower voltage levels of the rectangular wave are amplified by a Pockels cell driver and used to control the Pockels cell. The Pockels cell changes the angle of polarisation of the light passing therethrough in response to the instantaneous voltage level of the control signal supplied by the Pockels cell driver.

The intensity of the light beam passing from the Pockels cell linear polariser combination conforms with the control signal and will be alternately above and below the level at which it can affect a light responsive coating to produce the first and second indicia.

According to the present invention, a method of writing a signal information track on a disc having a surface capable of responding to a certain intensity of laser or other radiation (the threshold level) by being converted from having one radiation reflecting characteristic to having a second characteristic, in which a beam of radiation is directed at a local point along the track and is modulated in intensity in accordance with the signal information, the modulation bias being controlled to minimize second harmonic distortion, is characterised in that a signal representing the second harmonic content of the intensity modulated beam at the signal information carrier frequency is fed back to provide a modulating bias level such that the second harmonic distortion of the modulated radiation is a minimum.

The invention also provides an apparatus which effects the above method, as set out in claim 1.

Japanese Patent Specification No. 539101 teaches the idea of maintaining a proper relationship of write intensity to threshold level in order to get a recording which is free of second harmonic distortion. Also Broadbent's Article "A Review of the MCA Discovision System" at page 12 of Information Display Vol. 12. No. 2 April, 1976, teaches the idea of using an adjustable d.c. bias on the Pockels cell to minimise second harmonic distortion which might otherwise be generated in the recording on the disc.

However it is to be noted that in both those items of prior art a control of the write beam is taught for achieving a recording which is free of second harmonic distortion.

In the present invention on the other hand, the second harmonic content of the modulated light beam itself is used to provide a modulating bias level for reducing that secondharmonic distortion of the modulated write beam.

US-A-3579145 discloses an arrangement for sensing drift in an optical modulator away from the most linear region of the intensity/voltage characteristic curve. In the method disclosed,a low frequency pilot signal is superimposed on the carrier, and a second harmonic of the pilot signal is produced and detected to produce a correction signal, if the operating point of the modulator should drift away into the non-linear point of the curve.

The invention may be carried into practice in various ways and one embodiment will be described with reference to the accompanying drawings in which:-
FIGURE 1 is a block diagram of a disc writing apparatus;
FIGURE 2 is a schematic diagram of a feedback circuit for use in the write apparatus shown in FIGURE 1, and
FIGURE 3 is a schematic diagram of a second harmonic detector circuit for use in the circuit of FIGURE 2.

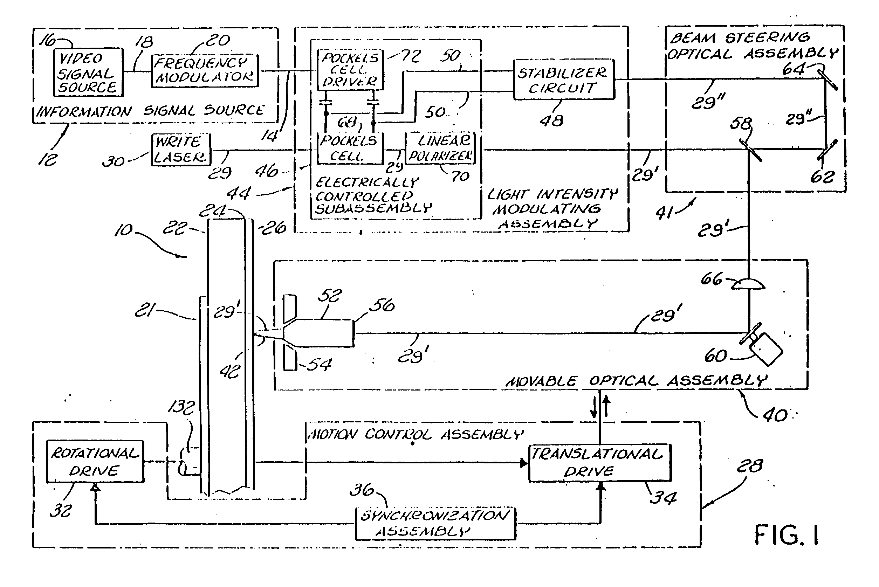

The apparatus for storing video information in the form of a frequency modulated signal upon an information storage member 10 is shown with reference to FIGURE 1. An information signal source circuit 12 is employed for providing an information signal to be recorded. This information signal present on a line 14 is a frequency modulated signal having its information content in the form of a carrier frequency having frequency changes in time representing said information to be recorded. The information signal source circuit 12 employs a video signal circuit 16 for providing an information signal on a line 18 having its information content in the form of a voltage varying with time. A frequency modulator circuit 20 is responsive to the video signal circuit 16 for converting the voltage varying with time signal to the frequency modulated signal on the line 14.

The information storage member 10 is mounted upon a turntable 21. It includes a substrate 22 having a first surface 24 and a light responsive coating 26 covering the first surface 24. A motion control assembly 28 imparts uniform motion to the storage member 10 relative to a write beam 29' generated by a light source 30. The motion control assembly 28 includes a rotational drive circuit 32 for providing uniform rotational motion to the information storage member 10 and translational drive circuit 34 synchronised with the rotational drive circuit 32 for moving the focused light beam 29' radially across the coating 26. The motion control assembly 28 further includes an electrical synchronizing assembly 36 for maintaining a constant relationship between the rotational motion imparted to the member 10 by the rotational drive circuit 32 and the translational motion imparted to the light beam 29 by the translational drive circuit 34.

The light source 30 comprises a writing laser for producing a collimated writing beam of polarised monochromatic light.

A movable optical assembly 40 and a beam steering optical assembly 41 collectively define an optical path for the light beam 29 issuing from the light source 30. The optical assemblies image the read beam 29 into a spot 42 upon the coating 26 carried by the storage member 10. The optical path is also represented by the line identified by the numerals 29 and 29'.

A light intensity modulating assembly 44 is positioned in the optical path 29 between the light source 30 and the coating 26.

The light beam 29 is modulated as it passes through the light intensity modulating assembly 44. Thereafter the modulated light beam, now represented by the numeral 29' is imaged upon the coating 26 by the optical assemblies 40 and 41. As the modulated light beam 29' impinges upon the coating 26, indicia are formed in said coating 26 representative of the frequency modulated signal to be stored.

The light intensity modulating assembly 44 includes an electrically controllable subassembly 46 which is responsive to the frequency modulator 20 for varying the intensity of the light beam 29' above a predetermined intensity at which the focused beam 29' alters the coating 26 carried by the information storage member 10.

When the coating 26 carried by the information storage member 10 is a metal coating, the electrically controllable subassembly 46 varies the intensity of the writing beam 29' above a first predetermined intensity at which the focused beam 29' melts the metal coating without vaporising it and further varies the intensity of the writing beam below the predetermined intensity at which the focused beam 29' fails to melt the metal surface.

The light intensity modulating assembly 44 includes a stabilising circuit 48 for providing a feedback signal which is connected to the electrically controllable sub-assembly 46 over the lines 50.

The movable optical assembly 40 includes an objective lens 52 and a hydrodynamic air bearing 54 for supporting the lens 52 above the coating 26. A planar convex diverging lens 66 positioned in the light beam 29' is employed for spreading the substantially parallel light beam 29' to at least fill the entrance aperture 56 of the objective lens 52.

The beam steering optical assembly 41 further includes a number of mirror members 58, 60, 62, and 64 for folding the light beams 29' and 29'' as desired.

The sub-assembly 46 includes a Pockels cell 68, a linear polariser 70 and a Pockels cell driver 72. The Pockels cell driver 72 is essentially a linear amplifier and is responsive to the frequency modulated signal on the line 14. The output from the Pockels cell driver 72 provides driving signals to the Pockels cell 68 for rotating the plane of polarisation of the laser beam 29. The linear polariser 70 is orientated in a predetermined relationship with respect to the original plane of polarisation of the laser beam 29 issuing from the laser source 30.

Depending upon the individual Pockels cell 68, a voltage change of the order of 100 volts causes the cell to rotate the plane of polarisation of the light passing therethrough a full ninety degrees. The Pockels cell driver functions to amplify the output from the information signal source 12 to a peak-to-peak output swing of 100 volts. This provides a proper input driving signal to the Pockels Cell 68.

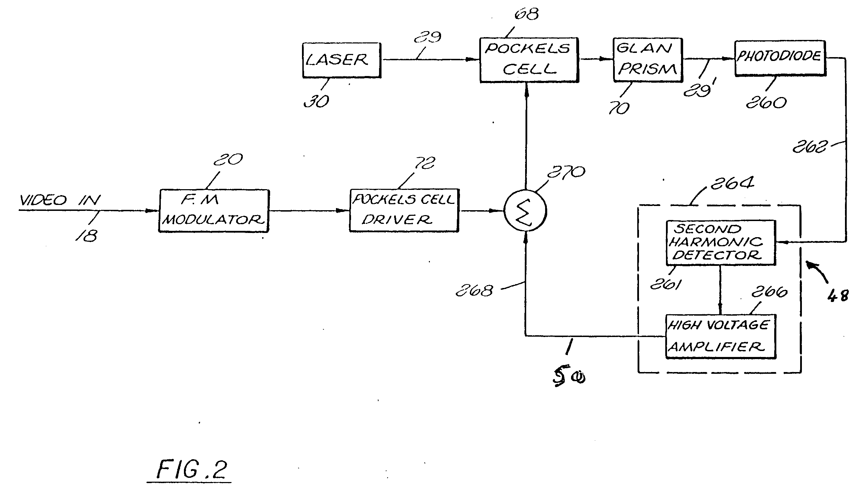

The stabilising feedback circuit is used to compensate for any second harmonic distortion products contained in the video information input signal which would show up in the modulated light beam at 29'. As shown in FIGURE 2, the output from the FM modulator 20 is applied to a Pockels cell driver 72 for developing the voltage required to drive the Pockels cell through its zero to ninety degree rotational shift. The unmodulated light beam 29 from the laser 30 is applied to the Pockels cell 68 as previously described.

The purpose of the Pockels cell feedback circuit is to bias the Pockels cell 68 so that the output light signal detected at a photo diode 260 is as free of second harmonic content as possible.

The second harmonic distortion is introduced into the modulated light beam at 29' from a plurality of sources. A first of such sources is the non-linear transfer functions of both the Pockels cell 68 and the Glan prism 70. When the input video signal on the linear 18 itself contains second harmonic distortion products this further increases the total second harmonic distortion products in the light beam at 29'.

The Pockels cell bias servo functions to adjust the DC bias applied to the Pockels cell 68, which DC bias biases the Pockels cell to its half power point, so as to minimize the second harmonic content of the output light beam.

The change in DC bias level from the half power point is achieved in the following sequence of steps. The modulated light beam 28' from the Pockels cell 68 is applied to a photo diode 260. The photo diode 260 operates in its standard mode of operation and generates a signal having the form of a carrier frequency with frequency variations about the carrier frequency. This frequency modulated waveform is a sufficiently linear representation of the light impinging upon the photo diode 261 to accurately reflect the signal content of the light modulated beam 29' impinging upon the disc surface. More specifically, the output signal from the photo diode 260 contains the distortion products present in the modulated light beam 29'. The output from the photo diode 260 is applied to a second harmonic detector 261 over a line 262 which forms a part of the bias control circuit 264. The output from the second harmonic detector is to a high voltage amplifier 266 which generates the DC bias signal over a line 268. The line 268 is connected to a summation circuit 270 which has as its second input signal the output from the Pockels cell driver 72. The DC bias signal on the line 268 is summed with the output from the Pockels cell driver 72 and is applied to the Pockels cell 68 for changing the DC bias of the Pockels cell 68.

Referring back to the operation of the second harmonic detector 261, this device generates a voltage which is approximately linear in the ratio of the second harmonic to the fundamental of the output light beam. Furthermore, the output signal reflects the phase characteristics of the second harmonic and if the second harmonic is in phase with the fundamental, the output of the second harmonic detector is in a first voltage level, i.e., a positive level. If the second harmonic is opposite in phase with the fundamental, then the output of the second harmonic detector is at a second voltage level, i.e. a negative voltage level. The output from the second harmonic detector is amplified through a high voltage amplifier 266 which provides a range of zero to three hundred volts of dc bias. This dc bias is summed with the signal from the FM modulator 20 amplified in the Pockels cell driver 72 and applied to the Pockels cell 68.

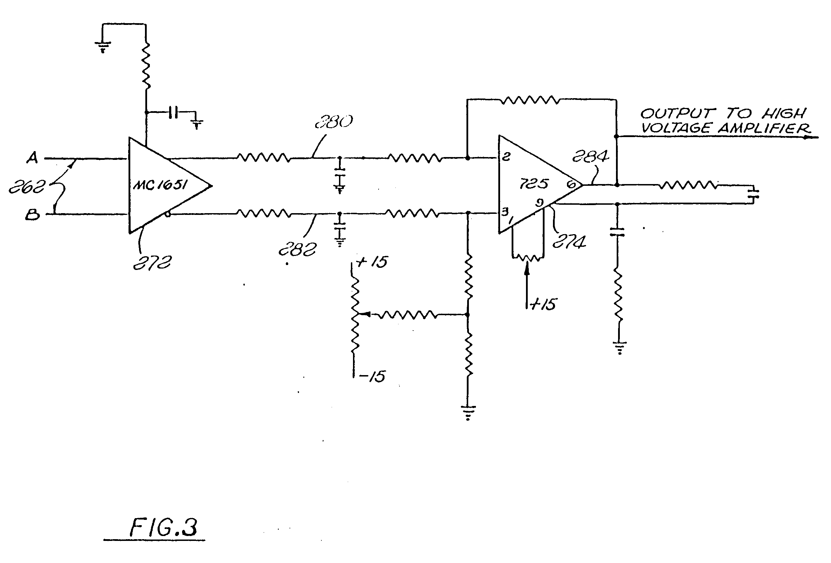

The second harmonic detector is shown in FIGURE 3 and includes a limiter 272 and a differential amplifier 274. The output signal from the photo diode 260 is AC coupled to the limiter 272 over line 262. The limiter 272 has a first output signal for application to the differential amplifier over a first output leg 280. The second output from the limiter 272 is applied to the second input of the differential amplifier over a second output leg 282. The output signals from the limiter 272 are logical complements of each other. More specifically, when one output is at a relatively high voltage level, the other output is at a relatively low voltage level. The two output signals on the legs 280 and 282 are fed into the differential amplifier 274. The output of this differential amplifier reflects the content of the second harmonic available on the input signal lines 262.

When the input signal from the photo diode 260 is substantially free of second harmonic distortion, then the output signal from the differential amplifier 274 at terminal 284 is a square wave with exactly a 50% duty cycle and with voltage levels extending between two predetermined voltage levels above and below a constant reference level. The duty cycle 50% refers to a high voltage half cycle being equal in width to the following low voltage half cycle. The output of the differential amplifier 274 is, on the average, zero.

When a degree of second harmonic distortion is present in the output from the photo diode 260, the value of harmonic distortion shifts the mean value crossing from a symmetrical case to a non-symmetrical case. In this situtation, the output from the differential amplifier is other than a squarewave with a fifty-fifty duty cycle. The differential amplifier therefore detects the effective DC level shift of the incorning signal and generates an output which is above or below zero on the average, depending upon the asymmetrical nature of the input signal. The output of the differential amplifier is therefore applied to the high voltage amplifier which d.c. smooths the output from the differential amplifier 274 and amplifies the negative or positive resulting DC level. The resulting product is the required shift in bias signal for application to the Pockels cell to return the operating point of the Pockels cell to the half power point at which zero harmonic distortion occurs.

## Claims

1. Apparatus for writing a signal information track, including: a disc (10) having a surface (26) capable of responding to a certain intensity of laser (30) or other radiation (the threshold level) by being converted from having one radiation reflecting characteristic to having a second characteristic means (44) for modulating in intensity a beam of radiation (29') directed at a local point along the track as the beam moves along the track, the modulation being in accordance with the signal information (16), the modulation bias being controlled to minimize second harmonic distortion, and characterised by a second harmonic detector (261) for generating a signal (268) representing the second harmonic content of the intensity modulated beam (29') at the signal information carrier frequency and a feedback circuit (268) arranged to bias the modulating means (68) in response to the second harmonic signal such that the second harmonic distortion of the modulated writing beam is a minimum.

2. Apparatus as claimed in Claim 1 including a photosensitive device (260) responsive to the modulated radiation (29') and a limiting device (272) for supplying the output (280) of the photosensitive device and the inversion (282) of that output to opposite inputs of a differential amplifier (274) whose output is the second harmonic responsive signal.

3. Apparatus as claimed in Claim 2 in which the second harmonic responsive means is connected through a high voltage amplifier (266) to a summing circuit (270) which also receives signals responsive to the signal information to be written, and which provides an output to the modulating means.

4. A method of writing a signal information track on a disc (10) having a surface (26) capable of responding to a certain intensity of laser (30) or other radiation (the threshold level) by being converted from having one radiation reflecting characteristic to having a second characteristic in which a beam of radiation (29') directed at a local point along the track is modulated in intensity in accordance with the signal information (16), the modulation bias being controlled to minimize second harmonic distortion characterised in that a signal (268) representing the second harmonic content of the intensity modulated beam (29') at the signal information carrier frequency is fed back (268) to provide a modulating bias level such that the second harmonic distortion of the modulated radiation is a minimum.

5. A method as claimed in Claim 4 in which the fed-back signal is linearly related to the ratio of the second harmonic content to the fundamental frequency of the modulated radiation.

6. A method as claimed in Claim 4 or Claim 5 in which the fed-back signal has a polarity depending on whether the second harmonic component is in phase with, or in phase opposition with the fundamental frequency, and has an amplitude dependent upon the level of the second harmonic content.

## Patentansprüche

1. Gerät zum Schreiben einer Informationsspur, mit einer Scheibe (10), deren Oberfläche (26) auf eine bestimmte Intensität der Strahlung eines Lasers (30) oder anderer Strahlung (Schwellenhöhe) dadurch anzusprechen vermag, daß sie aus einem Zustand mit einer bestimmten Strahlungsreflexionseigenschaft in einen Zustand mit einer zweiten Eigenschaft umgewandelt wird, mit einer Vorrichtung (44) zur Intensitätsmodulation eines auf einen Ortspunkt längs der Spur gerichteten Strahlenbündels (29'), während der Strahl sich längs der Spur bewegt, wobei die Modulation in Übereinstimmung mit der Information (16) ist, und die Modulationsvorspannung so geregelt ist, daß die Verzerrung der 2. Harmonischen minimiert wird, gekennzeichnet durch einen Detektor zur Erfassung der 2. Harmonischen (261), der ein Signal (268) erzeugt, das dem Anteil der 2. Harmonischen am intensitätsmodulierten Strahl (29') bei der Informations-Trägerfrequenz entspricht, und durch einen Rückkopplungskreis (268), der der Modulationseinrichtung (68) eine Vorspannung in Abhängigkeit von dem 2. Harmonischen-Signal erteilt, so daß die 2. Harmonischen-Verzerrung des modulierten Schreibstrahls minimiert wird.

2. Gerät nach Anspruch 1, gekennzeichnet durch eine auf die modulierte Strahlung (29') ansprechende lichtempfindliche Vorrichtung (260) sowie eine Begrenzungsvorrichtung (272) zum Zuführen des Augangssignals (280) der lichtempfindlichen Vorrichtung und der Umkehrung (282) dieses Ausgangssignals auf die entgegengesetzten Eingänge eines Differentialverstärkers (274), dessen Ausgangssignal das von der 2. Harmonischen abhängige Signal ist.

3. Gerät nach Anspruch 2, dadurch gekennzeichnet, daß die auf die 2. Harmonische ansprechende Einrichtung über einen Hochspannungsverstärker (266) mit einem Summierkreis (270) verbunden ist, der außerdem Signale aufnimmt, die von der zu schreibondcn Information abhängen, und der ein Ausgangssignal an die Modulationseinrichtung liefert.

4. Verfahren zum Schreiben einer Informationsspur auf eine Scheibe (10), deren Oberfläche (26) auf eine bestimmte Intensität der Strahlung eines Lasers (30) oder anderer Strahlung (Schwellenhöhe) in der Weise anzusprechen vermag, daß die Oberfläche aus einem Zustand mit einer bestimmten Strahlungsreflexionseigenschaft in einen Zustand mit einer zweiten Eigenschaft umgewandelt wird, in welchem ein auf einen Ortspunkt längs der Spur gerichtetes Strahlenbündel (29') nach Maßgabe der Information (16) intensitätsmoduliert wird, wobei die Modulationsvorsspannung so geregelt wird, daß die Verzerrung der 2. Harmonischen minimiert wird, dadurch gekennzeichnet, daß ein dem Anteil der 2. Harmonischen am intensitätsmodulierten Strahl (29') entsprechendes Signal bei der Informationsträgerfrequenz rückgekoppelt wird (268), um einen Modulationsvorspannungspegel zu liefern, derart, daß die Verzerrung der 2. Harmonischen der modulierten Strahlung minimiert wird.

5. Verfahren nach Anspruch 4, dadurch gekennzeichnet, daß das Rückkopplungssignal in linearer Beziehung zu dem Verhältnis des Anteils der 2. Harmonischen zu der Grundfrequenz der modulierten Strahlung steht.

6. Verfahren nach Anspruch 4 oder 5, dadurch gekennzeichnet, daß das rückgekoppelte Signal eine Polarität bcsitzt, die davon abhängt,ob die 2. Harmonischen-Komponente phasengleich oder in Gegenphase mit der Grundfrequenz ist, und eine Amplitude besitzt, die von dem Pegel des Anteils der 2, Harmonischen abhängt.

## Revendications

1. Appareil pour écrire une piste d'information de signaux, comprenant un disque (10) ayant une surface (26) capable de répondre à une certaine intensité de laser (30) ou autre rayonnement (le niveau de seuil) en étant convertie d'une caractéristique de réflexion de rayonnement à une seconde caractéristique; un moyen (44) pour moduler en intensité un faisceau de rayonnement (29') dirigé à un point local le long de la piste lorsque le faisceau se déplace le long de la piste, la modulation étant suivant l'information (16), la polarisation de la modulation étant contrôlée pour minimiser la distorsion de seconde harmonique; et caractérisé par un détecteur de seconde harmonique (261) pour produire un signal (268) représentatif du contenu de seconde harmonique du faisceau modulé en intensité (29') à la fréquence porteuse d'information et un circuit de contre-réaction (268) agencé pour polariser le moyen modulant (68) en réponse au signal de seconde harmonique de sorte que la distorsion de seconde harmonique du faisceau d'écriture modulé soit minimale.

2. Appareil selon la revendication 1, comprenant un dispositif photosensible (260) sensible au rayonnement modulé (29') et un dispositif de limitation (272) pour appliquer la sortie (280) du dispositif photosensible et l'inversion (282) de cette sortie aux entrées opposées d'un amplificateur différentiel (274) dont la sortie est le signal sensible à la seconde harmonique.

3. Appareil selon la revendication 2, dans lequel le moyen sensible à la seconde harmonique est relié par un amplificateur de tension élevée (266) à un circuit d'addition (270) qui reçoit également des signaux sensibles à l'information à écrire, et qui produit une sortie au moyen modulant.

4. Procédé d'écriture d'une piste d'information de signaux sur un disque (10) ayant une surface (26) capable de répondre à une certaine intensité de laser (30) ou autre rayonnement (le niveau de seuil) en étant convertie d'une caractéristique de réflexion de rayonnement à une seconde caractéristique dans laquelle un faisceau de rayonnement (29') dirigé à un point local le long de la piste est modulé en intensité selon l'information (16), la polarisation de la modulation étant contrôlée pour minimiser la distorsion de seconde harmonique; caractérisée en ce qu'un signal (268) représentant le contenu de seconde harmonique du faisceau modulé en intensité (29') à la fréquence porteuse d'information est couplé rétroactivement (268) pour produire un niveau de polarisation modulant de sorte que la distorsion de seconde harmonique du rayonnement modulé soit minimale.

5. Procédé selon la revendication 4, dans lequel le signal contre-réacté est linéairement en relation avec le rapport du contenu de seconde harmonique à la fréquence fondamentale du rayonnement modulé.

6. Procédé selon la revendication 4 ou 5, dans lequel le signal contre-réacté a une polarité suivant que la composante de seconde harmonique est en phase ou est en opposition de phase avec la fréquence fondamentale, et a une amplitude dépendant du niveau du contenu de seconde harmonique.
